# EUROPEAN PATENT SPECIFICATION

(11) **EP 2 308 631 B1**
(45) Date of publication and mention of the grant of the patent: **08.08.2018**
(21) Application number: 10425324.0
(22) Date of filing: 06.10.2010
(51) Int. Cl.: B23K 9/09

(54) **Procedure and system for the control of the arc current output delivered in welding processes**
Verfahren und System zur Steuerung des Lichtbogen-Stroms in Schweissverfahren
Procédé et système pour contrôler le courant d'arc dans des procédés de soudage

(30) Priority: 07.10.2009 IT VI20090247
(43) Date of publication of application: 13.04.2011
(73) Proprietor: TER S.r.L., 36030 Caldogno (VI) (IT)
(72) Inventor: Terzo, Maurizio, 36030 Caldogno (VI) (IT); Cortelazzo, Enrico, 36030 Caldogno (VI) (IT)
(74) Representative: Iannone, Carlo Luigi

(56) References cited:
- EP-A2- 1 413 381
- EP-A2- 1 710 897
- US-A1- 2009 071 949

## Description

The present invention generally refers to a procedure and relative system for the control of the arc current output delivered during welding processes, as defined in the preambles of claims 1 and 5, as for example known from US 2009/0071949 A1. More specifically, the invention relates to a procedure and an electronic control system of the arc current output delivered during welding, suitable to determine the switching frequency of a power component (inverter) as a function of the desired output current, transfer power, minimum transfer current and required dynamics, understood as variation of the desired output current per the time unit.

Welding is a process allowing the permanent connection of the solid parts of each other different or similar materials and which produces the continuity of the material where it is applied; moreover, in its most common meaning, it requires the contribution of localized heat such that to allow the smelting of the material and such a material can be the material forming the same parts which are joined each other (autogenous welding) or a foreign material, also known as weld material (heterogeneous welding or brazing).

The heat needed for the implementation of the welding process is accomplished by various systems, such as:
- a flame produced by combustion of a gas with air or oxygen;
- an electric arc formed between two electrodes (one of them can be the same piece to be welded);
- an electric resistance produced by Joule effect at the passage of a current through the pieces to be welded;
- a high-power laser or by other means of other system of energy supply other from flame.

Finally, in order to get a tough, technically good and free of imperfections welding, the smelting area must be protected from oxidation phenomena and the molten metal must be purified from scum; in order to avoid oxidation welding must take place in an atmosphere as much as possible deprived of oxygen (inert) and, to do that, in the area near the welding, substances such as gas, borax, silicates and carbonates are added, which create a protective cloud near the smelting bath and allow expulsion of scum.

For example, oxyacetylene welding a reducing atmosphere is produced, while the arc welding is carried out in the atmosphere produced by combustion of the coating of the electrode or under gas flow.

The main types of electric arc welding include MIG (Metal-arc Inert Gas) or MAG (Metal Active Gas-arc) welding, where the only difference between these types is represented by the gas used to protect the welding bath, and TIG welding (Tungsten Inert Gas).

The process of MIG/MAG welding is a continuous wire process, having high productivity, wherein bath welding protection is provided by a shielding gas, flowing from the torch onto the piece to be welded, and a MIG/MAG welding station essentially consists of the torch (with the dual function of causing the arc spark between the wire and piece and bringing the shielding gas on the welding bath), the piece to be welded, the arc current generator (usually electronically controlled), a mechanism of feed and control of the wire, a winding-wire reel and a bottle of the shielding gas.

In this way, it is possible to have current densities higher than those ones which can be borne by the coated electrodes, thus it is possible to greater penetrations, that is a joint filling with a smaller number of passages, beyond the further advantages coming from the fact that it is possible to weld also in not flat positions and that the operator can hold the arc under direct observation.

TIG welding is an arc welding process with infusible (tungsten) electrode, under inert gas protection, which can be performed with or without welded metal.

The process, which can be automated and used for thin materials, is based on a torch into which the tungsten electrode is inserted, around which the shielding gas flows, which, through a nozzle made of ceramic material, is brought onto the smelting bath; the operator moves the torch along the joint in order to shift the smelting bath, while in case welded material is required, he simultaneously moves the rod of the welded material, in order to keep it constantly with the end within the arc and anyway under gas protection.

In this way, the welded material in the smelting bath is independent from the thermal welding contribution, unlike what happens in the wire or consumable electrode welding.

For all the welding types described, the arc current generator is traditionally electronically controlled by an inverter, an electronic device suitable to convert direct current into alternating current, possibly at different voltage, or an alternating current into another one of different frequency.

In constructing the electronic inverters, power components of switching type, such as IGBT, thyristors or MOSFET, as switches, are normally used which, driven by an oscillator, produce the desired output waveform.

Opening and closing a circuit, indeed, generates a square wave, which, applied to a transformer, provides to the output provides the required voltage (rounding to some extent the square wave).

In any case, the best inverter base their operation on the pulse width modulation (PWM, acronym for "pulse-width modulation") and the system can be feedback activated in order to provide a stable output voltage to vary the input voltage.

However, even if the power MOSFET and IGBT are able to operate at high switching frequencies (up to 100 kHz and more) and to use high switching frequencies, especially in welding applications, in order to ensure the fast as possible dynamic to output waveform, on the other hand, at each switching, the MOSFET and/or IGBT component dissipates a lot of energy (switching energy), thus significantly contributing to the overheating of the component, virtually limiting features and performance thereof.

Therefore, normally, it is sought to establish a working frequency which is a good compromise between reply speed and low dissipation and, once fixed the frequency, a control circuit of the inverter modulates the duty-cycle (also called "work cycle" or "full-load ratio", that is the ratio between the "high" signal and the total period of the signal, when the latter takes the form of a square wave) of the control signal of the switching component in order to produce the desired output waveform.

In practice, in order to control the arc current output, either a frequency modulation (usually with fixed duty-cycle of a predetermined value set in microseconds) or a duty-cycle modulation (with fixed frequency, usually around 100 kHz) is normally used, through the operation of a digital control of the inverter in order to get the desired output waveform.

However, each of the two aforesaid modes presents some recognized drawbacks, such as high power dissipations of switching energy (at high frequencies) and/or minimum pulse width of control.

In this regard, indeed, when the IGBT component is turned on, the amount of energy transferred to the output presents a minimum value below which it is not possible to go and if, at a given switching frequency, the energy transferred is greater than the desired one, the only possible way to reduce the energy transferred is to reduce the switching frequency.

Within the abovementioned requirements, purpose of the present invention is, therefore, to overcome the just complained drawbacks.

In particular, primary purpose of the invention is to indicate a procedure for the control of arc current output delivered in welding processes which allows to get the maximum variability of the intensity of the output current, keeping, at the same time, the minimum switching frequency.

Another purpose of the present invention is to provide a system for the control of the arc current output delivered in welding processes which can implement the procedure described above.

Further purpose of the invention is to develop a procedure and a system for the control of the arc current output delivered in welding processes which are extremely reliable, efficient and functional and able to combine the advantages of the frequency modulation and duty-cycle modulation achievable through systems of digital control of switching type.

Within such a purpose, it is also task of the present invention to implement a procedure and a system for the control of the arc current output delivered in welding processes which allows to preserve the features and performances of the power component of switching type which controls the welding arc current generator.

These and other purposes, according to the present invention, are achieved by means of a procedure for controlling the arc current output current delivered in welding processes, according to claim 1 attached, and by creating a related control system according to claim 5, as hereinafter referred for the sake of brevity.

Other applicative and technical features of detail respectively of the procedure and system of the invention are described in the corresponding dependent claims.

Advantageously, the invention implements a system of control of the switching component (inverter) of the current output delivered in the electric arc, suitable to vary, beyond the duty-cycle, even the working frequency, in order to fit it to the requirements of the welding process.

In particular, the control system uses high switching frequencies when the welding process requires very high dynamics, while, conversely, it uses switching frequencies gradually decreasing when the welding process does not require high dynamics and it is, instead, preferable to minimize power dissipation due to frequent switching.

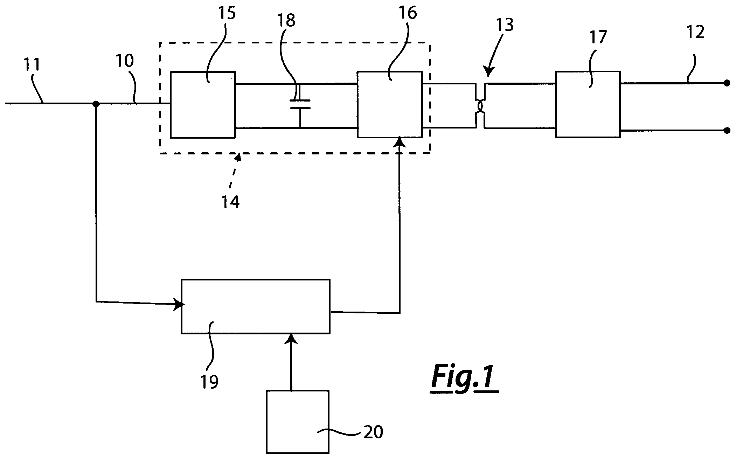

Additional features and advantages of the procedure for the control of the arc current output delivered in welding processes and the related system, both object of the current invention, will be more apparent from the description that follows, regarding an illustrative and preferred, but not limiting, embodiment, as well as from the attached drawing (fig. 1), which shows an outline block diagram of a control circuit of the arc current output delivered in welding processes, in accordance with the present invention.

Referring to the mentioned figure 1, the control circuit of the arc current of the invention essentially includes an input 10, connected with the single phase or three phase supply network 11, an output 12, a (single phase or multiphase) transformer device 13, placed downstream a power switching component 14, which can be controlled and basically composed of a rectifier device 15 of the input signal 10 and an inverter 16.

It is also possible to use a further rectifier device 17, positioned downstream the transformer 13.

In practice, the alternate single phase or three phase voltage or current signal present at the input 10 is rectified and converted into a corresponding continuous voltage or current signal downstream the device 15, where it is also levelled by the capacitor 18.

Downstream the inverter 16, the voltage or current signal is again alternate and frequency modulated (duty-cycle fixed) and/or pulse width modulated (duty-cycle modulation with a fixed frequency, for example, equal to approximately 100 kHz).

The inverter 16 is connected with an electronic control circuit 19, controlled by a microprocessor logic 20, which is in turn based on a software management program which determines the voltage or current pulses, shape of such pulses and desired modulation (in frequency or duty-cycle).

The alternating voltage or current signal is then transmitted to the transformer 13 and rectifier device 17, in order to result again a continuous voltage or current output signal 12, where the welding torch is connected.

In particular, according to the invention, the digital control circuit 19 is programmed by an algorithm in of the electronic logic 20 suitable to choose a frequency or duty-cycle modulation of the control signal of the inverter 16, in order to adjust a reference voltage or current value at the output 12.

Therefore maximum variability of the alternating and/or continuous voltage or current signals are obtained, ensuring at the same time minimum switching frequencies, as well as maximum modulation frequencies combined with minimum variability of the signals.

In particular, the control system according to the invention is able to determine the minimum switching frequency of the switching component 14 on the basis of the desired current or voltage output 12 (set voltage or current), transfer power (which depends on the set voltage or current and applied load), desired dynamics (understood as variation of the set voltage or current per time unit) and minimum transfer voltage or current.

In practice, by modulating both the frequency and duty-cycle, the algorithm of the control circuit 19 is able to determine the best values of frequency and duty-cycle for the specific application performed, taking also into account the previous values.

Specifically, the control circuit 19 uses high switching frequencies when the welding process requires very high dynamics (at medium-low current and for even extremely short time intervals, when dissipation phenomena do not much affect), while it uses switching frequencies which gradually decrease when the welding process does not require high dynamics (at high currents) and it is preferable to minimize switching dissipation.

Integral part of the present invention is also, as mentioned, the procedure for the control of the arc current output delivered in welding processes.

In accordance with the invention, such a procedure includes the operation of adjusting the functioning of the switching component (14), suitable to generate a desired waveform of the output signal 12 from a welding machine, not shown, to which the switching component 14 itself belongs, by varying and/or modulating simultaneously both the working frequency and pulse width of the control signal of said switching component 14 during a pre-established time interval of the welding process.

The operation of varying and/or modulating the working frequency and pulse width of the control signal of the switching component 14 is performed automatically and depends on the applicative modes of said welding process.

Therefore, the features of the procedure and system for the control of the arc current output delivered during welding processes, which are the object of the present invention, as well as the resulting benefits, are clear from the description just made.

It is finally clear that many other variations may be made to the control procedure and system in question, without departing from the principle of novelty intrinsic in the inventive idea expressed here, as it is clear that, in the practical implementation of the invention, materials, shapes and sizes of the illustrated details can be changed, as needed, and replaced with others technically equivalent.

Where the constructive features and techniques mentioned in the following claims are followed by reference numbers or signs, those reference signs have been introduced with the sole objective of increasing the intelligibility of the claims themselves and therefore they have no limiting effect on the interpretation of each element identified, by way of example only, by these reference signs.

## Claims

1. Procedure for the control of the arc current output delivered during welding processes, said procedure including the operation of adjusting the functioning of at least one switching component (14), suitable to generate a desired waveform of the output signal (12) from a welding machine to which said switching component (14) belongs, **characterized in that** said operation of adjusting consists in varying and/or modulating simultaneously both the working frequency and the impulse width of the control signal of said switching component (14) during a pre-established time interval of said welding process.

2. Procedure as claim 1) **characterized in that** said operation of varying and/or modulating said working frequency and said impulse width of said control signal of said switching component (14) is carried automatically and depends on the applicative mode of said welding process.

3. Procedure as claim 1) or 2) **characterized in that** values of switching frequency of said switching component (14) are determined on the basis of a desired output signal of voltage or current (12), transfer power, variation per time unit of said desired output signal voltage or current (12) and minimum transfer voltage or current.

4. Procedure as claim 3) **characterized in that** high values of switching frequency are used when the welding process requires high dynamics, while gradually decreasing values of switching frequency are used when the welding process does not require high dynamics, reducing at the same time the power dissipations.

5. System for the control of the arc current output delivered during welding processes, essentially comprising at least one input (10), connected with a supply network (11), at least one output (12) and at least one transformer device (13), placed downstream at least one switching component (14) suitable to generate a reference voltage or current value at said output (12), so as an alternate voltage or current signal present at said input (10) is rectified and converted into a respective continuous voltage or current signal downstream at least one rectifier device (15), said voltage or current signal being again alternating and frequency and/or impulse width modulated downstream at least one inverter (16) which forms said switching component (14) and being also delivered to said transformer (13) so as to consist of a continuous voltage or current signal at said output (12), where at least one welding torch is connected, **characterized in that** said inverter (16) is connected with an electronic control circuit (19, 20), driven by an algorithm suitable to impart simultaneously a frequency and impulse width modulation of the control signal of said inverter (16) by choosing said frequency or duty-cycle modulation of said control signal of said inverter (16).

6. System as claim 5) **characterized in that** said electronic control circuit (19, 20) determines a switching frequency value of said switching component (14) as a function of at least one predetermined value of voltage or current present at the output (12), the transfer power, the variation per unit time of said predetermined value of voltage or current and at least one minimum transfer voltage or current value.

7. System as claim 5) or 6), **characterized in that** said algorithm of the control circuit (19, 20), by modulating both the frequency and the impulse width, determines predetermined and desired frequency and impulse width values, depending on prefixed applications.

8. System as any of the claims from 5) to 7) **characterized in that** said algorithm of the control circuit (19, 20) uses high values of switching frequency when the welding process requires high dynamics, at medium-low currents and for reduced time intervals, and switching frequency values which gradually decrease when the welding process does not require high dynamics, at high currents and when it is necessary to reduce the switching dissipations.

## Patentansprüche

1. Verfahren zur Steuerung der während Schweißverfahren gelieferten Lichtbogenstromausgabe, wobei das Verfahren den Vorgang des Einstellens der Funktionen zumindest einer Schaltkomponente (14) beinhaltet, welche geeignet ist, eine gewünschte Wellenform des Ausgangssignals (12) von einer Schweißmaschine, zu welcher die Schaltkomponente (14) gehört, zu erzeugen, **dadurch gekennzeichnet, dass** der Vorgang des Einstellens besteht aus gleichzeitigem Variieren und/oder Modulieren sowohl der Betriebsfrequenz als auch der Impulsbreite des Steuersignals der Schaltkomponente (14) während einer vorgegebenen Zeitspanne des Schweißprozesses.

2. Verfahren nach Anspruch 1), **dadurch gekennzeichnet, dass** der Vorgang des Variierens und/oder Modulierens der Betriebsfrequenz und der Impulsbreite des Steuersignals der Schaltkomponente (14) automatisch getragen wird und von dem anwendbaren Modus des Schweißprozesses abhängt.

3. Verfahren nach Anspruch 1) oder 2), **dadurch gekennzeichnet, dass** Werte der Schaltfrequenz der Schaltkomponente (14) auf der Basis eines gewünschten Ausgangssignals von Spannung oder Strom (12), Transferleistung, Variation pro Zeiteinheit der gewünschten Ausgangssignalspannung oder dem -strom (12) und Minimumtransferspannung oder -strom bestimmt werden.

4. Verfahren nach Anspruch 3), **dadurch gekennzeichnet, dass** hohe Werte der Schaltfrequenz verwendet werden, wenn der Schweißprozess hohe Dynamik erfordert, während sich schrittweise verringernde Werte der Schaltfrequenz verwendet werden, wenn der Schweißprozess keine hohe Dynamik erfordert, wodurch gleichzeitig die Verlustleistungen verringert werden.

5. System zur Steuerung der Lichtbogenstromausgabe, welche während Schweißprozessen geliefert wird, im Wesentlichen umfassend zumindest einen Eingang (10), welcher mit einem Versorgungsnetzwerk (11) verbunden ist, zumindest einen Ausgang (12) und zumindest eine Transformatorvorrichtung (13), welche zumindest einer Schaltkomponente (14) nachgelagert ist, welche geeignet ist, einen Referenzspannungs- oder -stromwert an dem Ausgang (12) zu erzeugen, sodass ein an dem Eingang (10) anliegendes Wechselspannungs- oder -stromsignal nachgelagert an zumindest einer Gleichrichtervorrichtung (15) in ein entsprechendes Gleichspannungs- oder -stromsignal gleichgerichtet wird, wobei das Spannungs- oder Stromsignal zumindest nachgelagert an einem Wechselrichter (16), welcher die Schaltkomponente (14) bildet, nachgelagert wieder wechselnd und frequenz- und/oder impulsbreitenmoduliert wird und auch an den Transformator (13) geliefert wird, um aus einem Gleichspannungs- oder -stromsignal an dem Ausgang (12) zu bestehen, wobei zumindest ein Schweißbrenner angeschlossen ist, **dadurch gekennzeichnet, dass** der Wechselrichter (16) an eine elektronische Steuerschaltung (19, 20) angeschlossen ist, welche von einem Algorithmus gesteuert wird, welcher geeignet ist, gleichzeitig eine Frequenz- und Impulsbreitenmodulation des Steuersignals des Wechselrichters (16) durch Wählen der Frequenz- oder Taktverhältnismodulation des Steuersignals des Wechselrichters (16) weiterzugeben.

6. System nach Anspruch 5), **dadurch gekennzeichnet, dass** die elektronische Steuerschaltung (19, 20) einen Schaltfrequenzwert der Schaltkomponente (14) als eine Funktion von zumindest einem vorbestimmten Wert von Spannung oder Strom, welche an dem Ausgang (12) anliegen, der Transferleistung, der Variation pro Zeiteinheit des vorbestimmten Werts von Spannung oder Strom und zumindest einem minimalen Transferspannungs- oder -stromwert bestimmt.

7. System nach Anspruch 5) oder 6), **dadurch gekennzeichnet, dass** der Algorithmus der Steuerschaltung (19, 20) durch Modulieren sowohl der Frequenz als auch der Impulsbreite vorbestimmte und gewünschte Frequenz- und Impulsbreitenwerte abhängig von vorfixierten Anwendungen bestimmt.

8. System nach einem der Ansprüche von 5) bis 7), **dadurch gekennzeichnet, dass** der Algorithmus der Steuerschaltung (19, 20) bei mittelhohen Strömen und während verringerter Zeitspannen hohe Werte der Schaltfrequenz verwendet, wenn der Schweißprozess hohe Dynamik erfordert, und bei hohen Strömen und wenn es notwendig ist, die Schaltverluste zu verringern, sich schrittweise verringernde Werte der Schaltfrequenz, wenn der Schweißprozess keine hohe Dynamik erfordert.

## Revendications

1. Procédé pour la commande de la sortie de courant d'arc délivrée durant des procédés de soudage, ledit procédé incluant l'opération d'ajustement du fonctionnement d'au moins un composant de commutation (14), approprié pour générer une forme d'onde souhaitée du signal de sortie (12) à partir d'une machine à souder à laquelle ledit composant de commutation (14) appartient, **caractérisé en ce que** ladite opération d'ajustement consiste à faire varier et/ou à moduler simultanément à la fois la fréquence de travail et la largeur d'impulsion du signal de commande dudit composant de commutation (14) durant un intervalle de temps préétabli dudit procédé de soudage.

2. Procédé selon la revendication 1) **caractérisé en ce que** ladite opération de variation et/ou de modulation de ladite fréquence de travail et de ladite largeur d'impulsion dudit signal de commande dudit composant de commutation (14) est réalisée automatiquement et dépend du mode applicatif dudit procédé de soudage.

3. Procédé selon la revendication 1) ou 2) **caractérisé en ce que** les valeurs de fréquence de commutation dudit composant de commutation (14) sont déterminées sur la base d'un signal de sortie souhaité de tension ou de courant (12), de la puissance de transfert, de la variation par unité de temps de ladite tension ou dudit courant du signal de sortie souhaité (12) et d'une tension ou d'un courant de transfert minimum.

4. Procédé selon la revendication 3) **caractérisé en ce que** des valeurs élevées de fréquence de commutation sont utilisées lorsque le procédé de soudage nécessite une dynamique élevée, tandis que des valeurs de fréquence de commutation diminuant progressivement sont utilisées lorsque le procédé de soudage ne nécessite pas une dynamique élevée, en réduisant en même temps les dissipations de puissance.

5. Système pour la commande de la sortie de courant d'arc délivrée durant des procédés de soudage, comprenant essentiellement au moins une entrée (10), raccordée à un réseau d'alimentation (11), au moins une sortie (12) et au moins un dispositif transformateur (13), placé en aval d'au moins un composant de commutation (14) approprié pour générer une valeur de tension ou de courant de référence au niveau de ladite sortie (12), de sorte qu'un signal de tension ou de courant alternatif présent au niveau de ladite entrée (10) est redressé et converti en un signal de tension ou de courant continu respectif en aval d'au moins un dispositif redresseur (15), ledit signal de tension ou de courant étant à nouveau alternatif et modulé en fréquence et/ou en largeur d'impulsion en aval d'au moins un onduleur (16) qui forme ledit composant de commutation (14) et étant également délivré audit transformateur (13) de manière à être constitué d'un signal de tension ou de courant continu au niveau de ladite sortie (12), où au moins une torche de soudage est raccordée, **caractérisé en ce que** ledit onduleur (16) est raccordé un circuit de commande électronique (19, 20), commandé par un algorithme approprié pour conférer simultanément une modulation en fréquence et en largeur d'impulsion du signal de commande dudit onduleur (16) en choisissant ladite modulation en fréquence ou en cycle de service dudit signal de commande dudit onduleur (16).

6. Système selon la revendication 5) **caractérisé en ce que** ledit circuit de commande électronique (19, 20) détermine une valeur de fréquence de commutation dudit composant de commutation (14) en fonction d'au moins une valeur prédéterminée de tension ou de courant présente au niveau de la sortie (12), de la puissance de transfert, de la variation par unité de temps de ladite valeur prédéterminée de tension ou de courant et d'au moins une valeur de tension ou courant de transfert minimum.

7. Système selon la revendication 5) ou 6), **caractérisé en ce que** ledit algorithme du circuit de commande (19, 20), en modulant à la fois la fréquence et la largeur d'impulsion, détermine les valeurs de fréquence et de largeur d'impulsion prédéterminées et souhaitées, en fonction d'applications prédéfinies.

8. Système selon l'une quelconque des revendications 5) à 7) **caractérisé en ce que** ledit algorithme du circuit de commande (19, 20) utilise des valeurs élevées de fréquence de commutation lorsque le procédé de soudage nécessite une dynamique élevée, à des courants moyens à faibles et pendant des intervalles de temps réduits, et des valeurs de fréquence de commutation qui diminuent progressivement lorsque le procédé de soudage ne nécessite pas une dynamique élevée, à des courants élevés et lorsqu'il est nécessaire de réduire les dissipations de commutation.
